# EUROPÄISCHE PATENTANMELDUNG

(11) **EP 2 328 050 A1**
(43) Veröffentlichungstag der Anmeldung: **01.06.2011**
(21) Anmeldenummer: 09177518.9
(22) Anmeldetag: 30.11.2009
(51) Int. Cl.: G05B 19/05, G06K 9/00

(54) **Verfahren zum Betreiben eines Engineering-Systems und Engineering-System**

(71) Anmelder: Siemens Aktiengesellschaft, 80333 München (DE)
(72) Erfinder: Bollhöfer, Wilhelm, 76761 Rülzheim (DE)

(57) **Zusammenfassung**

Die Erfindung betrifft ein Verfahren zum Betreiben eines Engineering-Systems, welches zum Projektieren eines auf einer Anzeigeeinheit darstellbaren Prozessbildes (1) vorgesehen ist, welches einen zu steuernden technischen Prozess repräsentiert und mehrere Bildobjekte (2 bis 12) umfasst, die jeweils auf einem Basis-Bildobjekt (21) basieren, wobei mittels einer ersten Eingabe eines Benutzers aus einer Vielzahl von Basis-Bildobjekten (21) eine erste Auswahl von Basis-Bildobjekten (21) getroffen und in einem Vorlagenfeld (16) auf der Anzeigeeinheit dargestellt wird, wobei mittels einer zweiten Eingabe des Benutzers aus der ersten Auswahl von Basis-Bildobjekten (21) das Basis-Bildobjekt (21) ausgewählt wird, welches für das Prozessbild (1) vorgesehen ist. Es werden Maßnahmen vorgeschlagen, welche eine schnellere Auswahl eines Bildobjekts ermöglichen.

## Beschreibung

Die Erfindung betrifft ein Verfahren zum Betreiben eines Engineering-Systems, welches zum Projektieren eines auf einer Anzeigeeinheit darstellbaren Prozessbildes vorgesehen ist, welches einen zu steuernden technischen Prozess repräsentiert und mehrere Bildobjekte umfasst, die jeweils auf einem Basis-Bildobjekt basieren, wobei mittels einer ersten Eingabe eines Benutzers aus einer Vielzahl von Basis-Bildobjekten eine erste Auswahl von Basis-Bildobjekten getroffen und in einem Auswahlfeld auf der Anzeigeeinheit dargestellt wird, wobei mittels einer zweiten Eingabe des Benutzers aus der ersten Auswahl von Basis-Bildobjekten das Basis-Bildobjekt ausgewählt wird, welches für das Prozessbild vorgesehen ist. Darüber hinaus betrifft die Erfindung ein Engineering-System, welches zur Durchführung des Verfahrens geeignet ist.

Aus dem ,,Siemens-Katalog ST 80", Ausgabe 2009 ist ein Engineering-System sowie ferner ein Bedien- und Beobachtungssystem mit geeigneter Software bekannt, das zum Bedienen und Beobachten von zu steuernden technischen Prozessen bzw. von Fertigungsabläufen einer Anlage oder einer Maschine vorgesehen ist. Gewöhnlich wird dazu auf dem Engineering-System im Rahmen eines Automatisierungsprojektes eine Vielzahl von mehreren Bildobjekten aufweisenden Prozessbildern erstellt, die den zu steuernden technischen Prozess oder Teile dieses Prozesses repräsentieren. Das Engineering-System weist dazu eine geeignete Projektierungs-Software auf, mittels der ein Anwender das Prozessbild oder je nach Komplexität einer Anlage eine Vielzahl von Prozessbildern erstellt. Das Prozessbild wird in der Art und Weise erstellt, dass der Anwender, welchem in einem Anzeigefenster auf einer Anzeigeeinheit des Engineering-Systems eine Vielzahl von Basis-Bildobjekten dargestellt wird, z. B. mittels einem so genannten Pointing Device (Maus, Lichtgriffel, Touchscreen-Stift, ...) eine erste Auswahl trifft, indem der Anwender im Rahmen einer ersten Benutzereingabe eine von mehreren in einem weiteren Anzeigefenster dargestellten Kategorien von Basis-Bildobjekten anwählt bzw. markiert. Für den Fall, dass der Anwender z. B. die Kategorie ,,Ventile" mittels der Maus anwählt, werden in dem Anzeigefenster nur alle in einer "Ventil-Bibliothek" des Engineering-Systems oder eines Servers gespeicherten Ventil-Basis-Bildobjekte dargestellt; Basis-Bildobjekte anderer Bibliotheken werden nicht mehr angezeigt. Im Rahmen einer weiteren Eingabe wählt der Anwender in einem nächsten Schritt eines dieser Ventil-Basis-Bildobjekte aus, welches für das zu erstellende Prozessbild vorgesehen ist. Die Projektierungs-Software dupliziert das angewählte Basis-Bildobjekt, wobei in diesem Duplikat gewöhnlich Parameter von Eigenschaften geändert werden, um schließlich das aus dem Duplikat und den geänderten Parametern gebildete Bildobjekt in das Prozessbild einzufügen. Beispielsweise ändert der Anwender den Parameter für die Farbdarstellung in der Art, dass das auf dem Ventil-Basis-Bildobjekt basierende Ventil-Bildobjekt in einer Farbe Grün im Prozessbild angezeigt wird, anstatt in einer Farbe Grau gemäß dem Ventil-Basis-Bildobjekt.

Wie erwähnt, werden zwar durch die erste Benutzereingabe nur alle Basis-Bildobjekte einer Bibliothek dargestellt, Basis-Bildobjekte anderer Bibliotheken werden ausgeblendet. Aufgrund dessen allerdings, dass eine Bibliothek gewöhnlich mehrere hundert unterschiedliche Basis-Bildobjekte aufweist, ist die Suche und Auswahl des gewünschten Basis-Bildobjekts trotzdem zeitaufwendig.

Der vorliegenden Erfindung liegt die Aufgabe zugrunde, ein Verfahren der eingangs genannten Art anzugeben, welches eine schnellere Auswahl eines Bildobjekts ermöglicht. Darüber hinaus ist ein Engineering-System zu schaffen, welches zur Durchführung des Verfahrens geeignet ist.

Diese Aufgabe wird im Hinblick auf das Verfahren durch die im kennzeichnenden Teil des Anspruchs 1 angegebenen Maßnahmen gelöst. Im Hinblick auf ein Engineering-System gemäß dem Oberbegriff des Anspruchs 4 sind dazu die im kennzeichnenden Teil des Anspruchs 4 angegebenen Maßnahmen vorgesehen.

Vorteilhaft ist, dass aufgrund der auf einer Skizze basierenden ersten Auswahl auf eine Auswahl einer Kategorie aus einer Vielzahl von Kategorien verzichtet werden kann. Die Einteilung der Objekte in unterschiedliche Kategorien und die Hinterlegung dieser Objekte in unterschiedliche Bibliotheken ist nicht erforderlich. Es reicht aus, nur eine Bibliothek mit allen Basis-Bildobjekten anzulegen. Aufgrund der erstellten Skizze werden all diejenigen Basis-Bildobjekte ausgeblendet, welche nicht mit der Skizze übereinstimmen. Die Ausblendung erfolgt dynamisch; je detaillierter die Skizze eingegeben wird, desto höher ist die Anzahl der ausgeblendeten Objekte, wobei aus den restlichen eingeblendeten Basis-Bildobjekten das Objekt schnell aufgefunden werden kann.

In einer Ausgestaltung der Erfindung ist vorgesehen, dass die erste Auswahl ferner auf einer von dem Benutzer erstellten Text- und/oder Zahleneingabe basiert, wodurch die Benutzereingabe weiter vereinfacht wird.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein auf einem Engineering-System erstelltes Prozessbild und
- Figuren 2 bis 6: ein auf einer Anzeigeeinheit eines Engineering-Systems dargestelltes Dialogfenster.

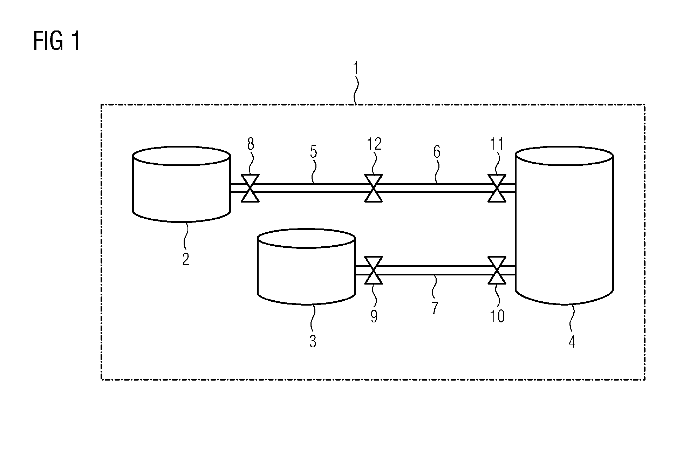

In Figur 1 ist mit 1 ein auf einem Engineering-System erstelltes Prozessbild bezeichnet, welches eine zu steuernde Produktionsanlage repräsentiert. Das Engineering-System ist Bestandteil eines Prozessleitsystems, welches weitere Bestandteile wie Bedien- und Beobachtungsgeräte, unterschiedliche Automatisierungsgeräte, ferner Aktoren und Sensoren sowie weitere zur Steuerung der Produktionsanlage erforderliche Automatisierungskomponenten umfasst, wobei die Teile über einen Bus miteinander verbunden sind. Die Automatisierungsgeräte können unterschiedlich ausgebildet sein. So sind gewöhnlich Automatisierungsgeräte zur Lösung kleiner, mittlerer und größerer Automatisierungsaufgaben innerhalb der Automatisierungseinrichtung vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Mit welchen Hard- und Softwarekomponenten, d. h. mit welchen Automatisierungsgeräten, Bedien- und Beobachtungsgeräten, Bussystemen, Aktoren und Sensoren, und mit welchen Steuerprogrammen die Automatisierungseinrichtung zu versehen ist, ist abhängig von der Komplexität der zu steuernden technischen Anlage und der Steueraufgabe. Die erforderlichen Hard-und Softwarekomponenten der Automatisierungseinrichtung, das Prozessbild 1 sowie weitere Prozessbilder sind durch das Engineering-System projektierbar, wobei die Prozessbilder nach ihrer Erstellung gewöhnlich in ein Bedien- und Beobachtungsgerät geladen werden. In Abhängigkeit von Ereignissen des zu steuernden Prozesses wird das jeweilige Prozessbild angepasst, z. B. wird ein Bildobjekt, das zunächst einen leeren Tank in einer Farbe Grau repräsentiert, zu einem späteren Zeitpunkt in einer Farbe Rot dargestellt, wodurch ein Anwender darauf hingewiesen wird, dass der Tank nun befüllt ist.

Im vorliegenden Beispiel umfasst das mittels einem Engineering-System projektierte Prozessbild 1 mehrere Bildobjekte 2 bis 12, von denen die Bildobjekte 2, 3, 4 einen ersten Behälter, z. B. einen Behälter für einen Ausgangsstoff, einen Reaktor und einen zweiten Behälter, beispielsweise einen Behälter für ein Produkt, darstellen. Die weiteren Bildobjekte 5, 6, 7 repräsentieren Rohrleitungen, welche die Behälter verbinden, wobei in Form von Bildobjekten 8, 9, 10, 11, 12 angezeigte Ventile zum Öffnen bzw. Schließen der Rohrleitungen vorgesehen sind.

Das mehrere Bildobjekte 2 bis 12 umfassende Prozessbild 1 erstellt ein Anwender im Rahmen einer Projektierungsphase mittels des Engineering-Systems. Das Engineering-System weist dazu eine Projektierungs-Software auf, die einem Anwender bzw. Projektierer eine Vielzahl von auf einer Anzeigeeinheit des Engineering-Systems dargestellten Basis-Bildobjekten bereitstellt.

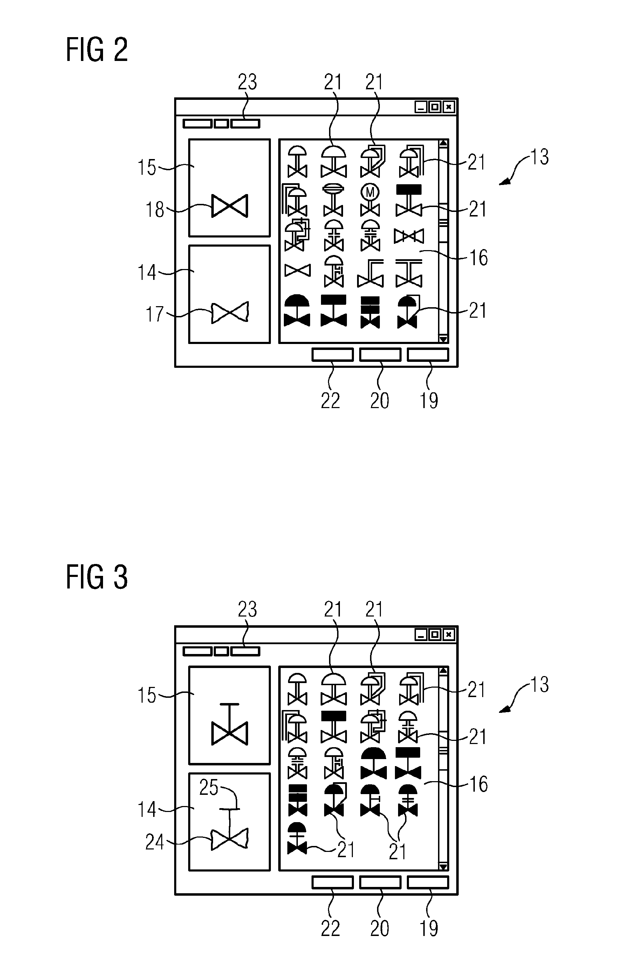

Zur näheren Erläuterung der Auswahl eines Basis-Bildobjektes wird im Folgenden auf die Figuren 2 bis 6 verwiesen, in welchen ein auf einer Anzeigeeinheit des Engineering-Systems dargestelltes Dialogfenster gezeigt ist. Die in den Figuren 2 bis 6 dargestellten gleichen Teile sind mit gleichen Bezugszeichen versehen.
Ein Dialogfenster 13 umfasst ein Eingabefenster 14, ein Ausgabefenster 15 sowie ein Vorlagenfenster 16. Das Eingabefenster 14 ist im Rahmen einer ersten Benutzereingabe zur Eingabe der Skizzen durch einen Anwender vorgesehen, wobei die Eingabe z. B. mittels einem so genannten Pointing Device in Form einer Maus erfolgt, indem der Anwender bei gedrückter Maustaste den Mauscursor verschiebt und entsprechend dieser Verschiebung eine Linie in diesem Eingabefenster 14 dargestellt wird. Im vorliegenden Ausführungsbeispiel weist eine mittels der Maus gezeichnete Skizze 17 im Eingabefenster 14 auf ein Basis-Bildobjekt ,,Ventil" hin, wobei die Projektierungs-Software oder eine dafür vorgesehene Bildauswerte-Software mittels eines an sich bekannten Bildauswerte- bzw. Bilderkennungsverfahrens, z. B. eines Verfahrens zur Erkennung des Umrisses oder der Kanten eines zu analysierenden Objektes, die gezeichnete Skizze 17 auswertet. Das Auswerteergebnis in Form eines grafischen Symbols 18 zeigt die Projektierungs-Software im Ausgabefenster 15 an, wodurch der Anwender kontrollieren kann, inwieweit die von ihm erstellte Skizze 17 mit dem erkannten Symbol 18 übereinstimmt. Mittels einer Taste 19 kann der Anwender das dargestellte Symbol 18 verwerfen oder mittels einer Taste 20 dieses akzeptieren. Für den Fall, dass der Anwender das Symbol 18 akzeptiert, sucht die Projektierungs-Software in einer in einem Speicher des Engineering-Systems oder eines Servers hinterlegten Basis-Bildobjekt-Bibliothek die Basis-Bildobjekte, welche mit dem Symbol 18 oder mit Teilen des Symbols 18 übereinstimmen. Die Projektierungs-Software zeigt schließlich im Vorlagenfenster 16 derart gefundene Basis-Bildobjekte 21 an, von denen der Anwender ein Basis-Bildobjekt mittels der Maus anwählt und mit einer Taste 22 kennzeichnet. Dieses gekennzeichnete Basis-Bildobjekt kann entweder direkt als Bildobjekt in das Prozessbild übernommen werden oder es wird zunächst mit Parametern versehen, um z. B. die Farbe des Basis-Bildobjektes zu ändern. Dazu ist eine weitere Taste 23 vorgesehen, mittels der der Anwender eine Farbpalette einblenden und eine Farbe für das gekennzeichnete Basis-Bildobjekt auswählen kann.

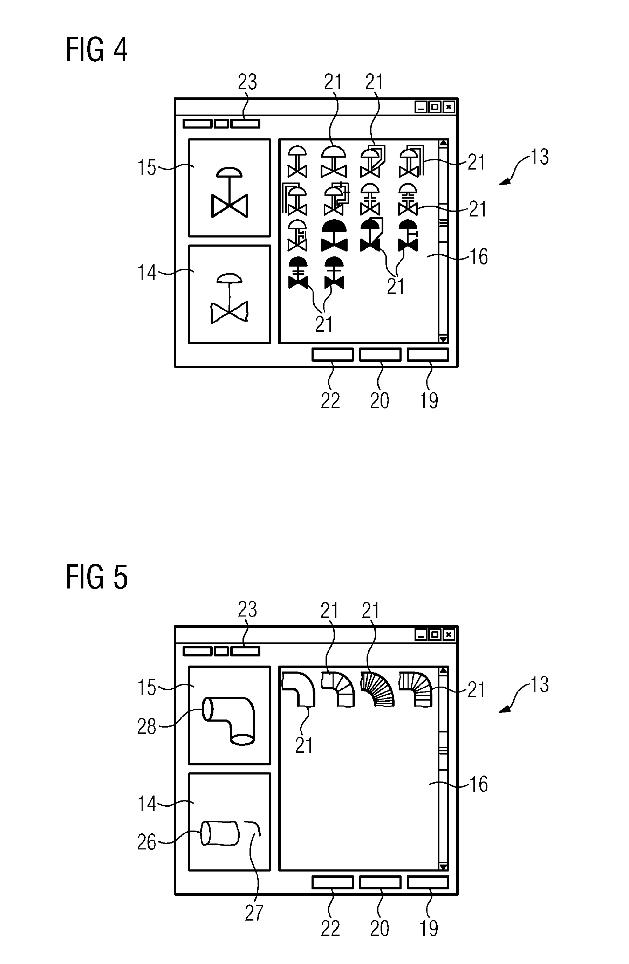

Durch eine Verfeinerung der gezeichneten Skizze 17 wird die Anzahl der im Vorlagenfenster 16 dargestellten Basis-Bildobjekte 21 reduziert. Wie in Figur 3 gezeigt, umfasst eine Skizze 24 die Skizze 17 gemäß Figur 2 und eine Ergänzung 25, wodurch im Vorlagenfenster 16 die Basis-Bildobjekte 21 ausgeblendet werden, welche diese Ergänzung 25 nicht aufweisen. Die Anzahl der dargestellten Basis-Bildobjekte reduziert sich weiter, falls ein Anwender weitere Ergänzungen an der Skizze 24 vornimmt (Figur 4).

Um die erste Benutzereingabe weiter zu erleichtern, ist ferner vorgesehen, dass mittels der Bildauswerte-Software oder der Projektierungs-Software des Engineering-Systems mehrere Skizzen ausgewertet werden, um eine erste Auswahl von Basis-Bildobjekten zu treffen. In diesem Zusammenhang wird auf Figur 5 verwiesen, welche von einem Anwender gezeichnete Skizzen im Eingabefenster 14 zeigt. Eine Skizze 26 stellt ein Rohr und eine weitere Skizze 27 den Krümmungsradius dieses Rohres dar, wobei die Bildauswerte-Software oder die Projektierungs-Software die beiden Skizzen 26, 27 verknüpft, als ,,gekrümmtes Rohr" interpretiert und ein gekrümmtes Rohr als Symbol 28 im Ausgabefenster 15 anzeigt. In der beschriebenen Art und Weise zeigt die Projektierungs-Software die Basis-Bildobjekte im Vorlagenfenster 16 an, welche mit dem Symbol 28 oder mit Teilen des Symbols 28 übereinstimmen, wobei der Anwender mittels einer weiteren Benutzereingabe - wie beschrieben - eines dieser Basis-Bildobjekte auswählt.

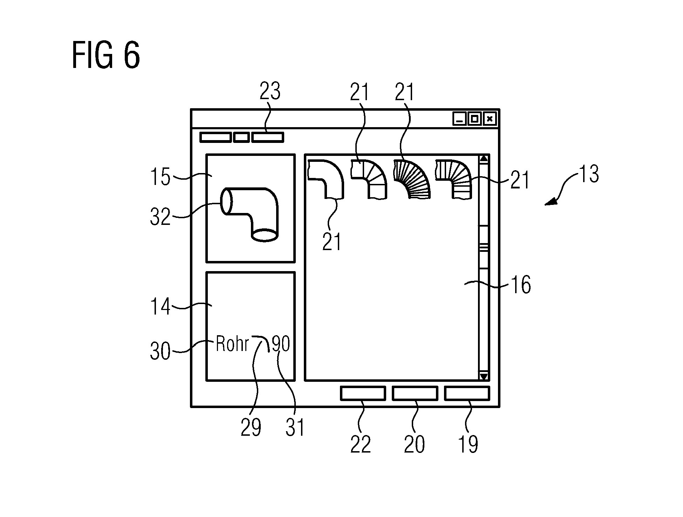

Eine weitere erste Benutzereingabe umfasst eine vom Anwender in das Eingabefenster 14 (Figur 6) eingetragene Skizze 29 sowie ferner Buchstaben 30 und Ziffern 31. Die Bildauswerte-Software oder die Projektierungs-Software ist dazu ausgebildet, sowohl grafische "Kurzsymbole" als auch Schriften zu erkennen, wobei im vorliegenden Beispiel die Bildauswerte-Software die Eingabe derart interpretiert, dass ein Rohr mit einer Krümmung von 90° gesucht wird, was in einem Symbol 32 im Ausgabefenster 15 dargestellt ist. Auch in diesem Fall zeigt die Projektierungs-Software die Basis-Bildobjekte im Vorlagenfenster 16 an, welche mit dem Symbol 32 oder mit Teilen dieses Symbols 32 übereinstimmen.

## Patentansprüche

1. Verfahren zum Betreiben eines Engineering-Systems, welches zum Projektieren eines auf einer Anzeigeeinheit darstellbaren Prozessbildes (1) vorgesehen ist, welches einen zu steuernden technischen Prozess repräsentiert und mehrere Bildobjekte (2 bis 12) umfasst, die jeweils auf einem Basis-Bildobjekt (21) basieren, wobei mittels einer ersten Eingabe eines Benutzers aus einer Vielzahl von Basis-Bildobjekten (21) eine erste Auswahl von Basis-Bildobjekten (21) getroffen und in einem Vorlagenfeld (16) auf der Anzeigeeinheit dargestellt wird, wobei mittels einer zweiten Eingabe des Benutzers aus der ersten Auswahl von Basis-Bildobjekten (21) das Basis-Bildobjekt (21) ausgewählt wird, welches für das Prozessbild (1) vorgesehen ist, **dadurch gekennzeichnet, dass** die erste Auswahl auf mindestens einer von dem Benutzer erstellten Skizze (17, 24, 26, 27) basiert.

2. Verfahren nach Anspruch 1, **dadurch gekennzeichnet, dass** die erste Auswahl ferner auf einer von dem Benutzer erstellten Text- und/oder Zahleneingabe (30, 31) basiert.

3. Verfahren nach Anspruch 1, **dadurch gekennzeichnet, dass** die erste Benutzereingabe mittels eines Tastfeldes, eines Tastschirms, eines Pointing Device oder Einscannen erfolgt.

4. Engineering-System, welches zum Projektieren eines auf einer Anzeigeeinheit darstellbaren Prozessbildes (1) vorgesehen ist, welches einen zu steuernden technischen Prozess repräsentiert und mehrere Bildobjekte (2 bis 12) umfasst,
die jeweils auf einem Basis-Bildobjekt basieren, wobei das Engineering-System dazu ausgebildet ist, aufgrund einer ersten Eingabe eines Benutzers aus einer Vielzahl von Basis-Bildobjekten (21) eine erste Auswahl von Basis-Bildobjekten (21) zu treffen und in einem Vorlagenfeld (16) auf der Anzeigeeinheit darzustellen sowie aufgrund einer zweiten Eingabe des Benutzers aus der ersten Auswahl von Basis-Bildobjekten (21) das Basis-Bildobjekt (21) auszuwählen, welches für das Prozessbild (1) vorgesehen ist, **dadurch gekennzeichnet, dass** das Engineering-System ferner dazu ausgebildet ist, die erste Auswahl basierend auf mindestens einer von dem Benutzer erstellten Skizze (17, 24, 26, 27) zu treffen.

5. Engineering-System nach Anspruch 4, **dadurch gekennzeichnet, dass** das Engineering-System dazu ausgebildet ist, die erste Auswahl ferner basierend auf einer von dem Benutzer erstellten Text- und/oder Zahleneingabe (30, 31) zu treffen.

6. Engineering-System nach Anspruch 4, **dadurch gekennzeichnet, dass** das Engineering-System ferner dazu ausgebildet ist, die erste Benutzereingabe mittels eines Tastfeldes, eines Tastschirms, einem Pointing Device oder Einscannen einzugeben.
